# FASCICULE DE BREVET EUROPEEN

(11) **EP 1 038 264 B1**
(45) Date de publication et mention de la délivrance du brevet: **02.05.2003**
(21) Numéro de dépôt: 98958319.0
(22) Date de dépôt: 03.12.1998
(51) Int. Cl.: G06K 19/077, G06K 19/04

(54) **SUBSTRAT MUNI D'UN DISPOSITIF ELECTRONIQUE**
MIT EINER ELEKTRONISCHEN ANORDNUNG VERSEHENES SUBSTRAT
SUBSTRATE PROVIDED WITH AN ELECTRONIC DEVICE

(30) Priorité: 17.12.1997 FR 9715995
(43) Date de publication de la demande: 27.09.2000
(73) Titulaire: SMURFIT WORLDWIDE RESEARCH EUROPE, 33405 Talence (FR)
(72) Inventeur: POUSTIS, Jo[l, F-33600 Pessac (FR)
(74) Mandataire: Muller, René
(86) Numéro de dépôt international: FR9802611
(87) Numéro de publication internationale: WO99031626

(56) Documents cités:
- EP-A- 0 615 285
- WO-A-94/11846
- WO-A-96/07985
- DE-A- 4 313 049
- DE-A- 19 601 358

## Description

La présente invention concerne une combinaison d'un substrat et d'une partie d'un système pour l'identification sans contact d'objets.

Il est connu pour repérer et identifier des objets d'associer ceux-ci à des dispositifs électroniques appelés « étiquettes électroniques ».

Une telle étiquette est munie d'un dispositif de réception et d'émission d'ondes électromagnétiques couplé avec un module électronique permettant de traiter des signaux reçus et d'en réémettre d'autres, comportant notamment un message d'identification de l'étiquette, et donc de l'objet avec lequel elle est associée. Par ailleurs, le système comporte un lecteur comprenant un dispositif d'émission/réception d'ondes électromagnétiques de manière à transmettre les informations entre un terminal de données et la dite étiquette électronique.

Le lecteur remplit plusieurs fonctions et notamment sert à :
- transmettre à l'étiquette l'énergie nécessaire à son fonctionnement, l'étiquette étant dépourvue de source d'énergie autonome spécifique.
- transmettre à l'étiquette des données provenant du terminal, ces données étant le cas échéant inscriptibles dans une mémoire dont l'étiquette est pourvue,
- recevoir des données provenant de l'étiquette et spécifiques à celles-ci, en particulier en vue de son identification.

Jusqu'à un passé récent, la plupart des applications, pour lesquelles une étiquette électronique du type mentionné plus haut était destinée, se satisfaisaient d'une lecture simultanée d'un nombre limité (inférieur à 10) d'étiquettes dans le champ d'interrogation.

Les applications visées étaient en outre le contrôle d'accès à une installation, le suivi de l'accès à une installation de personnes ou de bagages, le comptage d'objets notamment pour la gestion de stock dans une usine ou installation industrielle ou encore la reconnaissance du passage d'objets, comme par exemple des voitures à un péage.

Pour répondre à des applications particulières, dans lesquelles un grand nombre d'étiquettes doit être lu de manière sûre, simultanément et rapidement, et la transmission de données doit être possible soit étiquette par étiquette, soit pour la globalité des étiquettes, des améliorations aux dites étiquettes ont été apportées.

Une telle amélioration est par exemple décrite dans les brevets français FR 2 741 978, FR 2 741 979, FR 2 741 980. Grâce à cette amélioration, il est désormais possible de répondre aux exigences précitées à moindre coût ; l'ensemble des étiquettes pouvant être disséminé dans un volume important, de l'ordre de quelques m³.

Ainsi, par exemple, le contrôle, la comptabilisation et/ou la vérification d'articles achetés par un chaland dans une grande surface sont maintenant rendus possible. La gestion d'un atelier de stockage ou d'une logistique de transport sont également possibles.

Par ailleurs, cette amélioration fonctionnelle des étiquettes électroniques qui leur permet d'être adaptées à des applications bien particulières, s'est accompagnée de manière avantageuse d'une amélioration dimensionnelle.

En effet, certaines étiquettes ont été considérablement miniaturisées de sorte qu'elles présentent désormais une épaisseur inférieure au millimètre pour une largeur maximale de l'ordre de deux centimètres.

Une telle miniaturisation pose évidemment un problème de solidarisation d'une étiquette du type mentionné ci-dessus à l'objet susceptible d'être repéré et/ou identifié au moyen d'une telle étiquette.

DE-A-196 01 358 décrit un matériau de base, principalement un papier sécurisé pour écritures ou impression infalsifiables, qui intègre un dispositif électronique dans le matériau. L'inclusion du dispositif se fait de préférence par incorporation dans la masse de papier, pendant la fabrication des bandes de papier ou par collage entre deux feuilles.

WO-A-96/07985 concerne des « tags » fins et flexibles renfermant un circuit électronique, susceptibles d'être appliqués sur ou incorporés dans différents supports tels que timbres postaux, membrane d'enveloppe, passeport, billets d'entrée, cartes de crédit ou d'identité.

EP-A-615 285 décrit une façon d'attacher un circuit électronique sur un substrat qui consiste à former une cavité ou une indentation dans le substrat, y placer le circuit, éventuellement appliquer un deuxième composant. Le substrat peut être constitué de carton, matières plastiques, verre ou métaux.

WO-A-94/11846 décrit l'insertion d'un transpondeur dans un couvercle de rouleau, comprenant deux substrats cellulosiques, notamment sous forme de carton ondulé, avec deux couches de barrière contre l'humidité disposées chacune sur un substrat.

L'invention a pour but de résoudre le problème posé et notamment de proposer un nouveau conditionnement d'un dispositif électronique présentant les caractéristiques de l'étiquette électronique mentionnée plus haut, qui soit apte à être solidarisé aisément à un objet, et ceci, quelle que soit la forme et la finalité de ce dernier.

Ce but est atteint grâce à une combinaison selon la revendication 1.

Outre le fait qu'elle répond parfaitement au problème posé, la solution selon l'invention, a ceci d'extrêmement avantageux, qu'elle propose un substrat entièrement et facilement recyclable.

Par ailleurs, les ondes électromagnétiques émises et reçues par le dispositif électronique ne sont nullement perturbées par le substrat conforme à l'invention, quelle que soit leur gamme de fréquence d'utilisation.

La combinaison du dispositif électronique et du substrat cellulosique selon l'invention peut constituer en soi à la fois un produit et un conditionnement du dispositif électronique. De par la nature du substrat, celui-ci peut être facilement incorporé, lié à tout objet que l'on désire marquer et/ou repérer.

Ce conditionnement peut être aussi bien considéré comme un vecteur du dispositif électronique qu'une protection de ce dernier.

Le dispositif de réception et d'émission d'ondes électromagnétiques conforme à l'invention comprend en outre une antenne, de préférence du type comportant un bobinage.

Une telle configuration laisse une grande souplesse dans le choix de la station ou du portique d'interrogation susceptible d'être mise en oeuvre en tant que lecteur et transmetteur de données vers le dispositif électronique conforme à l'invention.

Ainsi, selon les orientations données au bobinage de ce dernier, la station d'interrogation peut comprendre un inducteur simple, bi-axe ou tri-axe.

Selon l'invention, les fibres cellulosiques du substrat sont sous la forme d'au moins une couche dans laquelle est noyé le dispositif électronique.

D'une manière très avantageuse, le volume spécifique de la couche est compris entre 1 et 10 cm³/g.

On précise que dans le cadre de l'invention, on entend par volume spécifique, le rapport entre l'épaisseur et le grammage de la couche.

En s'assurant d'une telle gamme, le dispositif électronique est non seulement noyé dans la couche selon l'invention, mais, en plus, il est rendu invisible à l'oeil nu.

Qui plus est, il est complètement noyé dans la couche, c'est à dire qu'aucune de ses faces n'émerge de la couche, le dispositif électronique selon l'invention est d'autant mieux protégé mécaniquement. En d'autres termes, sa durabilité est d'autant plus accrue.

Selon une caractéristique de l'invention, le substrat à base de fibres cellulosiques présente une rigidité globale d'au moins 5 mN.m.

En effet, la rigidité est le degré de résistance présenté par le substrat à base de fibres cellulosiques lorsqu'il est courbé dans des conditions spécifiques, En particulier, lorsque le substrat selon l'invention se présente sous la forme d'un carton, la rigidité est une des caractéristiques importantes, vis à vis de l'utilisation faite dudit carton.

Aussi, conférer au résultat à base de fibres cellulosiques une rigidité minimale telle que celle définie plus haut revient à s'assurer, à coup sûr, de l'intégrité « physique » du dispositif électronique lorsque ce même substrat est soumis à des sollicitations particulières spécifiques à l'application finale visée, sollicitations qui peuvent être par exemple liées au gerbage dans le cas où le substrat selon l'invention du carton, est un emballage mis sous la forme d'une boite ou d'une caisse.

L'invention vise enfin un procédé d'obtention selon la revendication 3.

Un tel procédé est très avantageux sur le plan industriel puisqu'il ne nécessite aucune adaptation industrielle particulière.

En effet, l'étape dans laquelle on noie le dispositif électronique conforme à l'invention est réalisée en continu et est complètement intégrée aux procédés de fabrication des substrats à base de fibres cellulosiques existants, qu'ils soient essentiellement sous la forme de papier ou de carton.

On noie le dispositif électronique dans la partie humide d'une machine à papier ou à carton.

Selon cette même variante, l'étape dans laquelle on noie le dispositif électronique peut être envisagée alternativement :
- dans une pâte liquide de fibres cellulosiques, dans une zone où le taux d'humidité est compris entre 80 et 95 % ;
- lors du mariage de deux nappes liquides de fibres cellulosiques, de préférence dans une zone où le taux d'humidité est compris entre 50 et 70 % ;

L'invention est susceptible d'applications nombreuses et variées. Il peut s'agir de marquage et/ou repérage d'objets tels que livres, vêtements, disques, produits alimentaires, produits industriels, équipements électroniques, rouleaux ou mandrins support de feuille...

Il peut aussi s'agir d'identification de produits et de services tels que cartes de crédit, cartes de téléphone, tickets de transports terrestres, maritimes ou aériens.

Il peut également s'agir de techniques de détection de la contrefaçon d'articles, plus particulièrement les articles de luxe, tels que vêtements...

Il peut enfin s'agir de techniques de communication par émission d'informations contenues dans le dispositif électronique selon l'invention sur des écrans de visualisation, par exemple à des fins publicitaires.

D'autres détails et caractéristiques avantageuses de l'invention ressortiront ci-après à la lecture d'exemples de réalisation, non limitatifs, faits en référence aux figures qui représentent :
- **figure 1** : une vue en coupe d'une boite d'emballage en cellulose moulée conforme à l'invention ;
- **figures 2a, 2b, 2c** : une vue générale en élévation d'un dispositif de fabrication d'un carton plat conforme à l'invention, une vue en élévation d'une partie de ce même dispositif, une vue en perspective d'un carton plat obtenu selon ce dispositif ;

On précise tout d'abord que, par souci de clarté, les figures sont extrêmement schématiques et ne respectent pas les proportions relatives entre les différents éléments.

On précise également que le dispositif électronique 4, décrit dans tous les exemples de réalisation ci-après, présente essentiellement les mêmes caractéristiques que l'étiquette électronique décrite dans le brevet français précité FR 2 741 978 et que son fonctionnement est analogue à celui décrit dans les brevets français précités FR 2 741 979 et FR 2 741 980.

En particulier, le dispositif de réception et d'émission d'ondes électromagnétiques intégré comprend une antenne qui comporte elle-même un bobinage.

On précise enfin que ce même dispositif électronique se présente sous la forme d'une pièce circulaire 4 de diamètre allant de quelques millimètres à quelques centimètres et d'épaisseur comprise entre 50 et 550 micromètres.

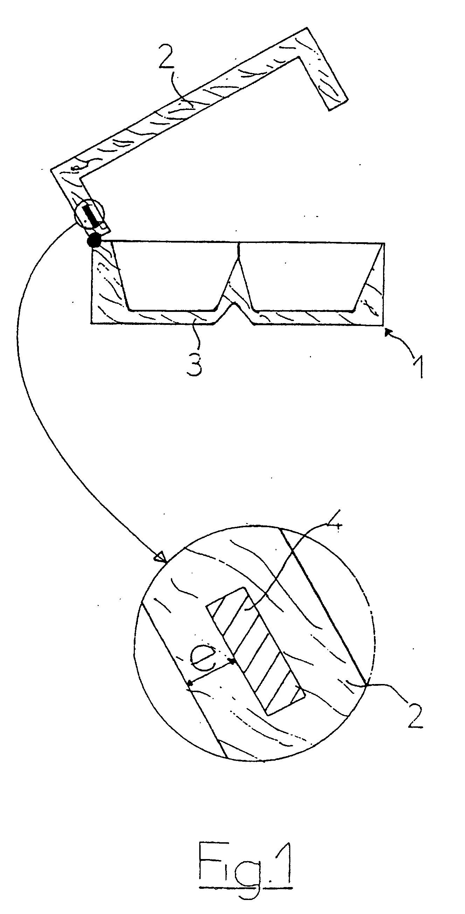

On se réfère tout d'abord à la figure 1. Celle-ci est une vue en coupe d'une boite 1 d'emballage en cellulose moulée comportant un couvercle 2 et un fond 3.

Ce fond 3 est destiné à servir de calage pour transporter des appareils électroniques divers et variés (téléphones portables...)

Dans le couvercle 2 est noyé un dispositif électronique 4 qui est donc rendu invisible à l'oeil nu.

Ce dispositif électronique 4 a pour fonction le repérage et l'identification des équipements électroniques logés dans la boîte 1 et contient un certain nombre d'informations, telles que le prix total, la date de fabrication et les références de ces appareils.

Pour insérer ce dispositif électronique 4 dans la boite 1, on a procédé de la manière suivante :
- on a préparé, de manière conventionnelle, une pâte liquide en mettant en suspension des fibres végétales de cellulose vierges ou recyclées dans un véhicule liquide, de préférence sous la forme d'eau,
- on a versé dans un moule de forme complémentaire à la boite 1 ladite pâte tout en laissant s'écouler le véhicule liquide jusqu'à ce que le taux d'humidité atteigne 80 à 95 %,
- une fois ce taux d'humidité atteint, on a positionné dans la pâte le dispositif électronique 4,
- enfin, on a effectué un passage sous presse de l'ensemble ainsi formé, ladite presse étant de forme conformée à celle du moule.

La force exercée par la presse a été réglée de telle sorte que le volume spécifique du matelas en cellulose soit de l'ordre de 2 cm³/g.

Dans ces conditions, toutes les faces du dispositif électronique 4 sont recouvertes d'une épaisseur e d'au moins 50 micromètres de matelas décrit précédemment.

Bien entendu, cette épaisseur e dépend de la nature des fibres végétales utilisées et de leur densité finale une fois l'emballage séché, densité directement proportionnelle à la force exercée par la presse.

L'homme de l'art doit adapter, à souhait, ces paramètres en fonction de l'application finale visée.

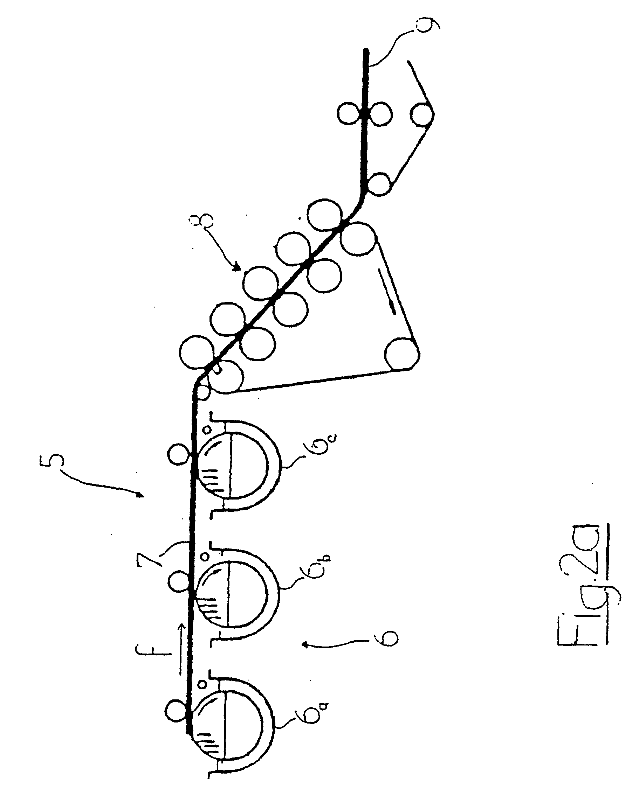

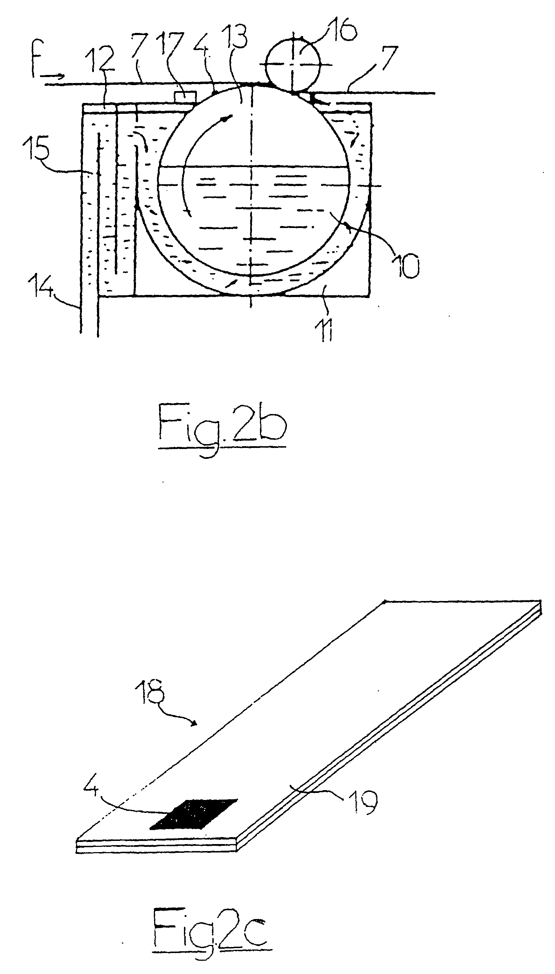

On se réfère maintenant aux figures 2a, 2b et 2c relatives à un carton plat conforme à l'invention.

La figure 2a est une vue générale en élévation d'une partie d'un dispositif de fabrication d'une combinaison selon l'invention.

Le dispositif de fabrication 5 comporte en outre trois dispositifs autonomes 6 (6a, 6b, 6c) alignés les uns à la suite des autres.

Chacun de ces dispositifs autonomes 6 a pour rôle de coucher une nappe liquide formée à partir d'une pâte de fibres cellulosiques, comme il le sera décrit ci-après, sur un support convoyeur 7, appelé feutre preneur, dont le sens de déplacement est indiqué par la flèche f sur la figure 2a.

En aval de ces dispositifs autonomes 6 et une fois que les nappes liquides se sont interpénétrées mutuellement, le support convoyeur 7 passe dans un ensemble de presses à égouttage 8 qui assemble de manière définitive les nappes en feuilles, feuilles qui forment à leur tour le carton plat 9.

Bien évidemment, pour achever la fabrication de ce carton plat 9, le dispositif de fabrication 5 comporte également en aval des dispositifs connus en soi tels que presse et sécherie.

Revenons en maintenant aux dispositifs autonomes 6 de formation d'une nappe liquide.

La figure 2b est une vue en élévation du dispositif 6b.

Celui-ci comporte essentiellement une forme ronde 10 mise en rotation dans un bac 11 surmonté d'un socle 12. Ce socle 12 ne laisse émerger qu'une fraction 13 de la forme ronde 10.

Le bac 11, quant à lui, communique avec une canalisation 14 par laquelle arrive la pâte liquide de fibres cellulosiques 15.

Un rouleau de pression 16, appelé presse leveuse, vient appliquer le support convoyeur 7 contre la fraction 13 émergente de la forme ronde 10.

Enfin, un distributeur 17 de dispositifs électroniques 4 est fixé sur le socle 12 immédiatement à proximité de la partie avant de la fraction 13 précitée.

Le fonctionnement de ce dispositif est le suivant : la forme ronde 10 en rotation prélève, en continu, une quantité régulière de la pâte 13 liquide de fibres cellulosiques sous la forme d'une nappe d'épaisseur proportionnelle à la vitesse de rotation de la forme ronde 10.

Le distributeur 17 dépose un dispositif électronique 4 sur cette nappe.

Au contact du rouleau de pression 16, le dispositif électronique 4 est noyé lors de l'interpénétration de la nappe avec le support convoyeur 7 sous lequel se trouve une autre nappe liquide provenant du dispositif de formation 6a situé en amont, dans une zone où le taux d'humidité est compris entre 50 et 70 %.

La fréquence à laquelle le distributeur dépose sur la forme ronde 10 des dispositifs électroniques 4 est définie en fonction de l'utilisation et donc, en outre, des dimensions finales du carton plat recherchées.

Ce dépôt peut être fait, par exemple, à intervalles réguliers et sa commande peut être asservie à un détecteur de présence du dispositif électronique 4 dans le carton plat. Le détecteur est positionné par exemple complètement en aval du dispositif de fabrication 5.

Quoi qu'il en soit, tous ces réglages sont à la portée de l'homme de l'art et il pourra établir ses choix en fonction des propriétés recherchées, propres à l'utilisation du produit en carton plat, telles que la rigidité, l'imprimabilité, la machinabilité.

La figure 2c montre une vue en perspective d'un ticket de métro 18 en carton plat 19 obtenu à partir du dispositif qui vient d'être décrit.

Par rapport aux tickets existants, celui-ci ne comporte plus de bande magnétique et son repérage s'effectue au moyen du dispositif électronique 4 inséré.

Il est à noter que quel que soit le mode de réalisation de l'invention décrit précédemment, l'étape dans laquelle on noie le dispositif électronique 4 a été réalisée sans adaptation particulière de ce dernier.

En outre, il a parfaitement résisté mécaniquement aux conditions de température, d'humidité et de pression rencontrées dans les différents dispositifs de fabrication décrits.

Bien entendu, diverses modifications de détail peuvent être apportées par l'homme de l'art sans pour autant sortir du cadre de l'invention selon les revendications, dans la mesure où, une fois noyé dans le substrat à base de fibres cellulosiques, l'intégrité et la fiabilité du dispositif électronique sont assurées.

## Revendications

1. Combinaison d'un substrat à base de fibres cellulosiques (2, 19) comprenant au moins une feuille de fibres cellulosiques, et d'au moins une partie d'un système pour l'identification sans contact d'objets, la partie du système comprenant au moins un dispositif électronique (4) comportant un dispositif de réception et d'émission d'ondes électromagnétiques couplé avec un module électronique permettant de traiter des signaux reçus et d'en réémettre d'autres, ledit dispositif de réception et d'émission d'ondes électromagnétiques comprenant en outre une antenne, de préférence du type comportant un bobinage, le substrat présentant une rigidité globale d'au moins 5 mN.m, ce dispositif électronique étant complètement noyé dans une couche de fibres cellulosiques sous forme de pâte liquide lors de la fabrication du substrat de manière à ce qu'aucune de ses faces n'émerge de la couche et de manière à le protéger, cette combinaison étant apte à être incorporée ou liée à tout objet à marquer ou à repérer.

2. Combinaison selon la revendication 1, **caractérisé en ce que** le volume spécifique de la couche dans laquelle est noyé le dispositif est compris entre 1 et 10 cm³/g.

3. Procédé d'obtention d'une combinaison selon l'une des revendications 1 à 2, dans lequel on réalise concomitamment les étapes suivantes :
a) on fabrique un substrat à base de fibres cellulosiques, présentant une rigidité d'au mois 5 mN.m,
b) on noie ledit dispositif électronique dans le substrat dans la partie humide d'une machine à papier ou à carton.

4. Application de la combinaison selon l'une quelconque des revendications 1 à 2 ou du procédé selon la revendication 3 au marquage et/ou repérage d'objets tels que livres, vêtements, disques, produits alimentaires, produits industriels, équipements électroniques, rouleaux et mandrins support de feuille.

5. Application de la combinaison selon l'une quelconque des revendications 1 à 2 ou du procédé selon la revendication 3, à l'identification de produits et de services tels que cartes de crédit, cartes de téléphone, tickets de transports terrestres, maritimes ou aériens.

## Patentansprüche

1. Kombination aus einem Substrat (2, 19) auf der Basis von Cellulosefasern, die mindestens ein Blatt aus Cellulosefasern und mindestens einen Teil eines Systems zur berührungslosen Identifizierung von Gegenständen umfasst, wobei der Teil des Systems mindestens eine elektronische Vorrichtung (4) enthält, die eine Vorrichtung zum Empfangen und Senden von elektromagnetischen Wellen umfasst, die mit einem elektronischen Modul gekoppelt ist, das es erlaubt, empfangene Signale zu verarbeiten und andere zurückzusenden, die Vorrichtung zum Empfangen und Senden von elektromagnetischen Wellen außerdem eine Antenne, vorzugsweise vom Typ mit einer Wicklung, enthält, das Substrat eine Gesamtsteifigkeit von mindestens 5 mN·m besitzt, die elektronische Vorrichtung bei der Herstellung des Substrats vollständig in eine in Form einer Pulpe vorliegenden Cellulosefaserschicht derart eingebettet wird, dass keine Seite aus der Schicht zum Vorschein kommt, und sie geschützt wird, und die Kombination geeignet ist, in einen beliebigen zu markierenden oder zu kennzeichnenden Gegenstand eingebaut oder mit diesem verbunden zu werden.

2. Kombination nach Anspruch 1, **dadurch gekennzeichnet, dass** die Dichte der Schicht, in welche die Vorrichtung eingebettet wird, 1 bis 10 cm³/g beträgt.

3. Verfahren zur Herstellung einer Kombination nach Anspruch 1, in welchem gleichzeitig die Stufen
a) Herstellen eines Substrats auf der Basis von Cellulosefasern, das eine Steifigkeit von mindestens 5 mN·m besitzt, und
b) Einbetten der elektronischen Vorrichtung in das Substrat in der Naßpartie einer Papier- oder Kartonmaschine
durchgeführt werden.

4. Verwendung der Kombination nach Anspruch 1 oder 2 oder Anwendung des Verfahrens nach Anspruch 3 zur Markierung und/oder Kennzeichnung von Gegenständen wie Büchern, Bekleidung, Disketten, Lebensmitteln, Industrieerzeugnissen, elektronischen Ausrüstungen, Papierrollen und auf einem Kern aufgewickelten Papierrollen.

5. Verwendung der Kombination nach Anspruch 1 oder 2 oder Anwendung des Verfahrens nach Anspruch 3 zur Identifizierung von Erzeugnissen und Dienstleistungen wie Kredit- und Telephonkarten und Tickets für die Beförderung zu Wasser, zu Lande und in der Luft.

## Claims

1. Combination of a substrate based on cellulose fibres (2, 19) comprising at least one sheet of cellulose fibres, and at least part of a system for the contactless identification of objects, the part of the system comprising at least one electronic device (4) comprising a device for receiving and transmitting electromagnetic waves coupled with an electronic module for processing signals received and retransmitting others of them, the said electromagnetic wave reception and transmission device also comprising an antenna, preferably of the type comprising a winding, the substrate having a total stiffness of at least 5 mN.m, this electronic device being completely embedded in a coating of cellulose fibres in the form of a liquid paste when the substrate is manufactured so that none of its faces emerges from the coating and so as to protect it, this combination being able to be incorporated in or linked to any object to be marked or located.

2. Combination according to Claim 1, **characterised in that** the specific volume of the coating in which the device is embedded is between 1 and 10 cm³/g.

3. Method of obtaining a combination according to one of Claims 1 to 2, in which the following steps are performed concomitantly:
a) a substrate based on cellulose fibres is manufactured, having a stiffness of at least 5 mN.m,
b) the said electronic device is embedded in the substrate in the wet part of a paper or board making machine.

4. Application of the combination according to either one of Claims 1 to 2 or of the method according to Claim 3 to the marking and/or locating of objects such as books, clothing, discs, food products, industrial products, electronic equipment and sheet support rolls and tubes.

5. Application of the combination according to either one of Claims 1 to 2 or of the method according to Claim 3 to the identification of products and services such as credit cards, telephone cards, or land, sea or air transport tickets.
